# DEMANDE DE BREVET EUROPEEN

(11) **EP 4 570 445 A1**
(43) Date de publication de la demande: **18.06.2025**
(21) Numéro de dépôt: 24218617.9
(22) Date de dépôt: 10.12.2024
(51) Int. Cl.: B25J 9/00, A61H 1/02

(54) **MEMBRE SUPÉRIEUR D EXOSQUELETTE À COMPACITÉ AMÉLIORÉE**

(30) Priorité: 14.12.2023 FR 2314211
(71) Demandeur: Commissariat à l'Energie Atomique et aux Energies Alternatives, 75015 Paris (FR)
(72) Inventeur: VERNEY, Alexandre, 38054 GRENOBLE CEDEX 09 (FR)
(74) Mandataire: Brevalex

(57) **Abrégé**

Membre supérieur (1) d'exosquelette comprenant ;
- un châssis (11)
- une interface de liaison (30)
- montée mobile relativement au châssis (11) pour effectuer une deuxième rotation (R2) et une troisième rotation (R3);
- la deuxième rotation (R2) étant actionnée par une première chaîne cinématique (100) d'actionnement comprenant un premier actionneur (103), et
- la troisième rotation (R3) étant actionnée par une deuxième chaîne cinématique d'actionnement comprenant un deuxième actionneur, dans lequel
- la première chaîne cinématique (100) comprend une première bielle (101) et/ou
- la deuxième chaîne cinématique comprend une deuxième bielle.

## Description

### DOMAINE TECHNIQUE

L'invention concerne le domaine des exosquelettes et plus particulièrement le domaine des membre supérieur d'exosquelette et leur actionnement.

### ÉTAT DE LA TECHNIQUE ANTÉRIEURE

Les exosquelettes sont des dispositifs apparentés à des manipulateurs motorisés et qui sont disposés à l'extérieur d'un membre du corps humain, généralement parallèlement à celui-ci. Ils permettent d'assister un utilisateur en supportant tout ou partie du poids de son membre (exosquelette de rééducation) voire en fournissant un effort supplémentaire (exosquelette d'assistance). Ils peuvent aussi être utilisées comme capteur de mouvement du membre tout en supprimant la fatigue nécessaire à son équilibre lors de diverses tâches télé opération, études cliniques, etc.

Classiquement, un membre supérieur d'exosquelette comprend un segment de bras en l'extrémité distale duquel est articulé un segment d'avant-bras. Généralement, l'extrémité proximale du segment de bras est articulée sur une articulation d'épaule reliée à l'utilisateur.

Lorsque l'on souhaite assister les mouvements de la main de l'utilisateur, le segment d'avant-bras peut alors comprendre un châssis destiné à accueillir un avant-bras de l'utilisateur. Le châssis comprend un support avant de poignet et un support arrière reliés par une structure pour autoriser une première rotation de pronosupination du support avant relativement au support arrière. Une poignée destinée à être saisie par une main de l'utilisateur est montée mobile relativement au châssis pour effectuer une rotation autour d'un axe de flexion/extension et une rotation autour d'un axe d'adduction-abduction. Ces rotations sont généralement actionnées à l'aide de moto-réducteurs électriques dont la sortie rotative est solidaire en rotation de la poignée. Ainsi, l'un des deux moto-réducteurs est solidaire d'un support qui est mis en rotation par l'autre des deux motoréducteurs. Ceci aboutit à un segment d'avant-bras encombrant, lourd et dont l'inertie est très importante.

Dans les mécanismes antérieurs, le bras de levier des actionneurs produit un moment de flexion important sur la structure du châssis , ce qui provoque des contraintes locales très importantes sur le guidage en rotation du support avant, d'où des frottements gênants lors des mouvements. De tels systèmes ont donc des charges utiles relativement faibles, des encombrements importants et des cinématiques d'actionnement complexes qui impactent défavorablement le confort d'utilisation, les applications possibles pour des membres supérieurs d'exosquelette, les coûts de fabrication et la complexité de commande.

### OBJET DE L'INVENTION

L'invention a pour objet de réduire l'inertie et la complexité cinématique d'un membre supérieur comprenant des actionneurs de poignet.

### EXPOSÉ DE L'INVENTION

A cet effet, on prévoit un membre supérieur d'exosquelette comprenant un châssis s'étendant selon un axe longitudinal et qui est destiné à accueillir un avant-bras d'un utilisateur, le châssis comprenant un support avant de poignet et un support arrière reliés par une structure pour autoriser une première rotation de pronosupination du support avant relativement au support arrière autour de l'axe longitudinal. Le membre supérieur comprend également une interface de liaison à une main de l'utilisateur montée mobile relativement au châssis pour effectuer une deuxième rotation autour d'un axe de flexion/extension et pour pouvoir effectuer une troisième rotation autour d'un axe d'adduction-abduction. La deuxième rotation est actionnée par une première chaîne cinématique d'actionnement comprenant un premier actionneur et la troisième rotation est actionnée par une deuxième chaîne cinématique d'actionnement comprenant un deuxième actionneur. Selon l'invention, la première chaîne cinématique comprend une première bielle dont une première extrémité arrière est articulée sur une première sortie du premier actionneur, la première bielle comprenant une première extrémité avant attelée à l'interface de liaison, et/ou la deuxième chaîne cinématique comprend une deuxième bielle dont une deuxième extrémité arrière est articulée sur une deuxième sortie du deuxième actionneur et la deuxième bielle comprend une deuxième extrémité avant attelée à l'interface de liaison.

Selon d'autres modes de réalisation particuliers, non exclusifs et optionnels de l'invention :
- la première extrémité avant et/ou la première extrémité arrière et/ou la deuxième extrémité avant et/ou la deuxième extrémité arrière comprennent une liaison rotule ;
- la deuxième extrémité avant est reliée à une tringlerie de renvoi qui comprend une troisième bielle de renvoi autour d'un troisième axe de rotation et une quatrième bielle de renvoi autour d'un quatrième axe de rotation ;
- le troisième axe est confondu avec l'axe de flexion ;
- l'interface de liaison est montée à rotation autour de l'axe d'adduction relativement à un bâti, le bâti étant lui-même monté à rotation relativement au châssis autour de l'axe de flexion ;
- le premier actionneur comprend un premier ensemble vis/écrou comprenant un premier écrou coopérant avec une première vis s'étendant selon une première direction sensiblement parallèle à l'axe longitudinal, un premier dispositif d'anti-rotation pour bloquer une rotation du premier écrou relativement à la première vis, un premier moteur agencé pour entraîner en rotation la première vis autour de la première direction et provoquer un déplacement linéaire du premier écrou ; dans lequel la première extrémité arrière est attelée au premier écrou ;
- le premier dispositif d'anti-rotation comprend un premier chariot relié d'une part au premier écrou et d'autre part à la première extrémité arrière de la première bielle, le premier dispositif d'anti-rotation comprenant également un premier mécanisme de guidage d'une translation du premier chariot relativement au châssis selon une direction parallèle à l'axe longitudinal, et dans lequel le premier chariot est relié au premier écrou par un première paire de câbles comprenant un premier câble et un deuxième câble s'étendant de part et d'autre de la première vis ainsi que par une deuxième paire de câbles comprenant un troisième câble et un quatrième câble s'étendant de part et d'autre de la première vis, la première paire de câbles et la deuxième paire de câbles s'étendant selon une direction sensiblement parallèle à l'axe longitudinal, la première paire de câbles et la deuxième paire de câbles étant situées de part et d'autre d'un premier plan passant par le premier écrou et qui est normal à la première vis ;
- le premier câble et le deuxième câble sont attelés au premier écrou par un premier support intermédiaire relié au premier écrou par un septième câble et un huitième câble ;
- le troisième câble et le quatrième câble sont attelés au premier écrou par un deuxième support intermédiaire relié au premier écrou par un neuvième câble et un dixième câble ;
- le deuxième actionneur comprend un deuxième ensemble vis/écrou comprenant un deuxième écrou coopérant avec une deuxième vis s'étendant selon une deuxième direction sensiblement parallèle à l'axe longitudinal, un deuxième dispositif d'anti-rotation pour bloquer une rotation du deuxième écrou relativement à la deuxième vis, un deuxième moteur agencé pour entraîner en rotation la deuxième vis autour de l'axe longitudinal et provoquer un déplacement linéaire du deuxième écrou ; dans lequel la deuxième extrémité arrière est attelée au deuxième écrou ;
- le premier et/ou le deuxième actionneur est un actionneur à sortie linéaire ;
- la première chaîne cinématique comprend, successivement, une sortie linéaire, une bielle, une manivelle montée à rotation relativement au châssis et actionnée par la bielle.

D'autres caractéristiques et avantages de l'invention apparaîtront à la lecture de la description qui suit d'un mode de réalisation particulier non limitatif de l'invention.

### BRÈVE DESCRIPTION DES DESSINS

Il sera fait référence aux figures jointes parmi lesquelles :
[Fig. 1] la figure 1 est une représentation schématique en en perspective d'un utilisateur portant un membre supérieur selon l'invention ;
[Fig. 2] la figure 2 est une représentation schématique partielle en perspective du membre supérieur de la figure 1 vue d'avant en arrière ;
[Fig. 3] la figure 3 est une vue identique à celle de la figure 2 vue d'arrière en avant ;
[Fig. 4] la figure 4 est une représentation schématique partielle en perspective de la première chaîne cinématique du membre supérieur de la figure 1 ;
[Fig. 5] la figure 5 est une représentation schématique en vue de dessus de la première chaîne cinématique de la figure 4 ;
[Fig. 6] la figure 6 est une représentation schématique en vue de côté de la première chaîne cinématique de la figure 5;
[Fig. 7] la figure 7 est une représentation cinématique de la première chaîne cinématique de la figure 5;
[Fig. 8] la figure 8 est une représentation cinématique de la deuxième chaîne cinématique du membre supérieur de la figure 1 .

### EXPOSÉ DÉTAILLÉ DE MODES DE RÉALISATION PARTICULIERS

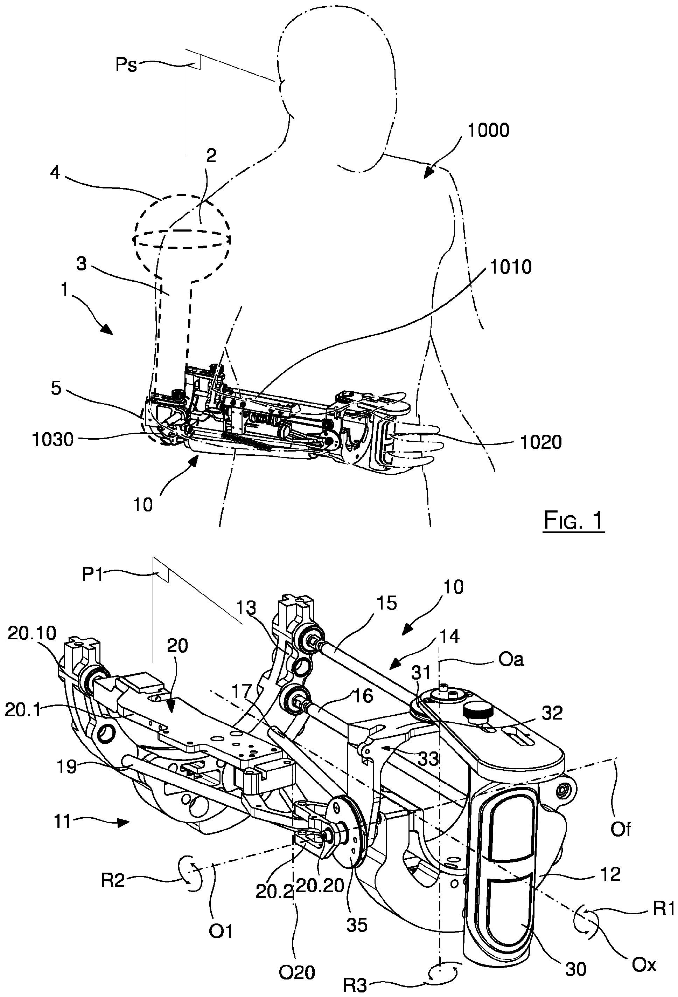

En référence à la figure 1, le membre supérieur- généralement désigné 1- équipe un exosquelette non représenté pourvu d'une articulation d'épaule 2 et d'un segment de bras 3. Le segment de bras 3 est articulé en son extrémité proximale 4 sur l'articulation d'épaule 2. Un segment d'avant-bras 10 est articulé sur l'extrémité distale 5 du segment de bras 3. Le segment d'avant-bras 10 est destiné à recevoir un avant-bras 1010 d'un utilisateur 1000. L'axe longitudinal de l'avant-bras 1010 est alors sensiblement confondu avec l'axe longitudinal Ox du segment 10. Les termes avant et arrière seront utilisés par analogie avec l'avant et l'arrière de l'avant-bras 1010. Ainsi l'avant correspondra à l'extrémité destinée à être du côté de la main 1020 et l'arrière correspondra à l'extrémité destinée à être du côté du coude 1030 de l'utilisateur 1000.

Le segment d'avant-bras 10 représenté sur la figure 2 comprend un châssis 11 s'étendant selon un axe longitudinal Ox. Le châssis 11 comprend un support avant 12 du poignet 1040 de l'utilisateur 1000, un support arrière 13 et une structure 14 reliant les supports avant 12 et arrière 13. Le support avant 12 a la forme d'un demi-anneau et est monté mobile relativement au support arrière 13.

La structure 14 est, ici, réalisée sous la forme d'un treillis qui comprend cinq barres 15 à 19 et une platine 20 en aluminium. Comme visible en figure 2, la structure comprend trois barres 15, 16 et 17 intérieures, une barre médiane 18 et une barre extérieure19 16, 17, 18 et 19 . Les barres 15 à 17 sont comprises entre un plan sagittal Ps de l'utilisateur 1000 et un premier plan P1 comprenant l'axe longitudinal Ox et qui est parallèle au plan sagittal Ps lorsque l'utilisateur 1000 est en position de repos, son avant-bras 1010 le long du corps : une barre 15 intérieure haute, une barre 16 intérieure intermédiaire et une barre 17 intérieure basse. La barre 18 médiane est située dans le plan P1. La barre extérieure basse 19 et la platine 20 se situent d'un autre côté du plan P1. Les extrémités longitudinales arrières des barres 15 et 16 et de la platine 20 sont reliées au support 13 par une liaison rotule. Les extrémités arrière des barres 17,18 et 19 sont reliées au support 13 par des liaisons encastrées -ici de type vissées et collées. Les barres 17 à 19 forment ainsi un mat fixe de type « treillis triangulaire » qui relie le support 12 au support 13 et reprend les efforts tranchants appliqués au support 12.

Les extrémités longitudinales avant des barres 15 et 16 sont également reliées au support 12 par des liaisons rotules. La platine 20 est, quant à elle, reliée au support 13 par une liaison rotule et au support 12 par une liaison pivot d'axe O1 sensiblement orthogonal au plan P1.

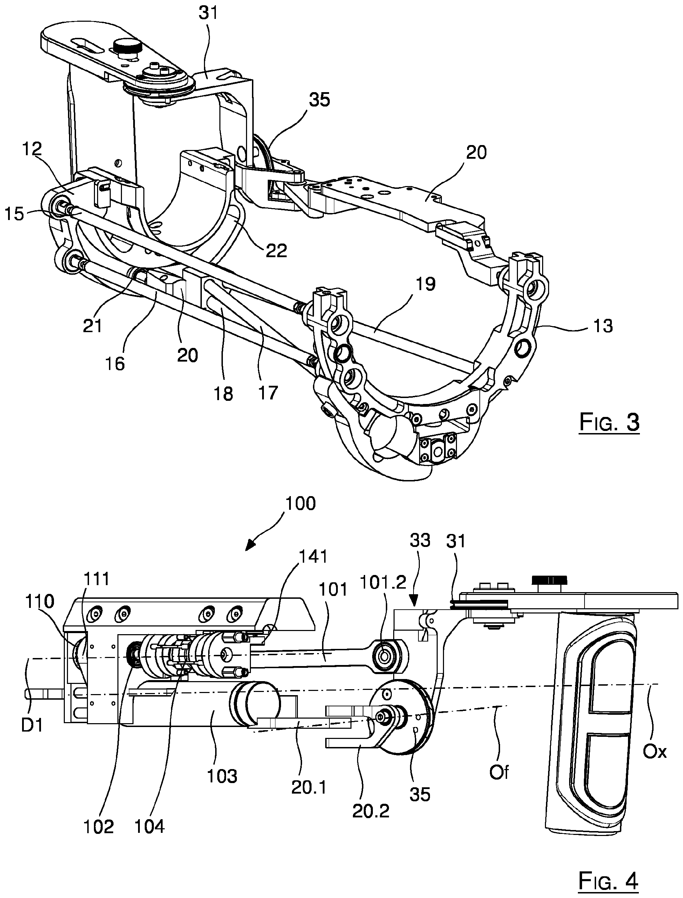

Comme visible en figures 2 et 3, le support arrière 13 a également la forme d'un demi-anneau, de diamètre plus grand que celui du support avant 12, afin de délimiter un espace intérieur tronconique se rapprochant du contour extérieur de l'avant-bras 1010. Le segment d'avant-bras 10 a alors sensiblement la forme d'un tronc de cône dont les barres 15 à 18 forment des génératrices.

Le support avant 12 est monté à pivotement relativement au support arrière 13 autour de l'axe Ox. Pour ce faire, les extrémités avant des barres 17 et 18 sont reliées au support 12 via un palier porte-galets 21 pourvu de trois galets 22 engagés dans une rainure 23 semi-circulaire formée dans le support 12. De manière préférentielle, et afin de supprimer les jeux de fonctionnement, un des galets 22 est monté à rotation sur un axe excentrique réglable. L'actionnement de cette liaison pivotante autour de l'axe Ox peut être réalisé selon diverses modalités connues de l'homme du métier, comme par exemple une motorisation des galets 21.

Cette liaison autorise une première rotation R1 de pronosupination du support avant 12 relativement au support arrière 13 autour de l'axe longitudinal Ox.

Comme visible en figures 2 et 3, une poignée 30 est solidaire d'une première poulie 31 montée à rotation autour d'un axe Oa d'adduction-abduction à l'aide d'un palier non représenté situé en une première extrémité 32 d'un bâti 33 en forme d'équerre. Une deuxième extrémité 34 du bâti 33 est montée à rotation relativement au support 12 autour d'un axe Of de flexion/extension, ici confondu avec l'axe O1.

La poignée 30 peut ainsi effectuer une deuxième rotation R2 autour de l'axe de flexion/extension et une troisième rotation R3 autour de l'axe Oa d'adduction-abduction. La deuxième rotation R2 est actionnée par une première chaîne cinématique 100 et la troisième rotation R3 est actionnée par une deuxième chaîne cinématique 200.

La première chaîne cinématique 100 comprend une première bielle 101 présentant une première extrémité arrière 101.1 et une première extrémité avant 101.2.

La deuxième chaîne cinématique 200 comprend également une deuxième bielle 201 présentant une deuxième extrémité arrière 201.1 et une deuxième extrémité avant 201.2.

La platine 20 ainsi que la première chaîne cinématique 100 et la deuxième chaîne cinématique 200 vont maintenant être décrites en détail.

La platine 20 comprend une première portion 20.1 et une deuxième portion 20.2 montées à pivotement l'une par rapport à l'autre autour d'un axe 020 orthogonal à un plan parallèle aux axes Ox et Of. La première portion 20.1 est reliée en son extrémité arrière 20.10 au support 13 par une liaison rotule, et la deuxième portion 20.2 est reliée en son extrémité 20.20 par une liaison pivot d'axe Of au support 12.

Comme visible en figures 4 à 6, la première chaîne cinématique 100 comprend un premier ensemble vis 102 / écrou 104 comprenant un premier écrou 104 coopérant avec une première vis 102 qui s'étend selon une première direction D1 sensiblement parallèle à l'axe longitudinal Ox. La première chaîne cinématique 100 comprend un premier dispositif d'anti-rotation 140 pour bloquer une rotation du premier écrou 104 relativement à la première vis 102 et former un premier actionneur 199 à sortie linéaire. Le dispositif d'anti-rotation 140 comporte un chariot 141 monté mobile en translation selon une direction parallèle à l'axe Ox à l'aide d'un premier mécanisme de guidage 150. Le mécanisme 150 est ici un guidage linéaire prismatique qui comprend un rail 151 rigidement solidaire de la platine 19 et sur lequel coulisse un patin 152 solidaire du chariot 141.

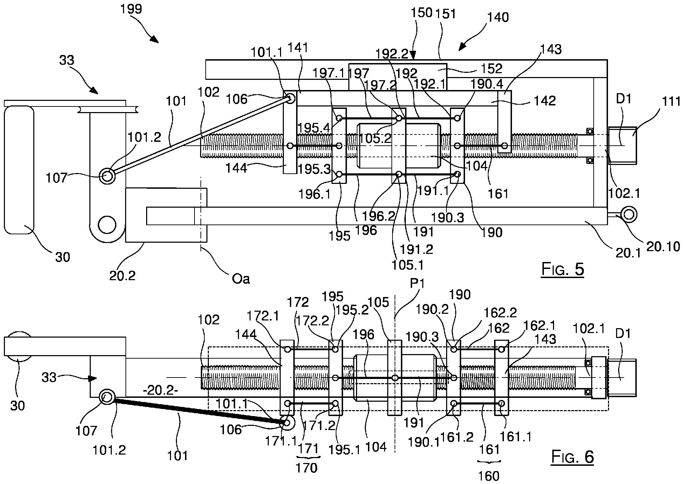

Le chariot 141 comprend une base 142 qui s'étend sensiblement parallèlement à l'axe longitudinal Ox et aux extrémités de laquelle viennent en saillie un premier bras 143 et un deuxième bras 144 qui constitue ainsi la sortie linéaire de l'actionneur 199. Le chariot 141 est relié à l'écrou 104 par une première paire de câbles 160 comprenant un premier câble 161 et un deuxième câble 162 s'étendant de part et d'autre de la vis 102 ainsi que par une deuxième paire de câbles 170 comprenant un troisième câble 171 et un quatrième câble 172 s'étendant de part et d'autre de la vis 102. Comme visible en figure 6, la première paire de câbles 160 et la deuxième paire de câbles 170 s'étendent selon une direction sensiblement parallèle à l'axe longitudinal Ox et la première paire de câbles 160 et la deuxième paire de câbles 170sont situées de part et d'autre d'un plan passant par l'écrou 104 et qui est normal à la vis 102. Plus précisément, une troisième extrémité 161.1 du câble 161 et une quatrième extrémité 162.1 du câble 162 sont serties sur le bras 143. Symétriquement, une cinquième extrémité 171.1 du câble 171 et une sixième extrémité 172.1 du câble 172 sont serties sur le bras 144. Une septième extrémité 161.2 du premier câble 161 et une huitième extrémité 162.2 du deuxième câble 162 sont également attelées à l'écrou 104 par un premier support intermédiaire 190 relié à l'écrou 104 par un septième câble 191 et un huitième câble 192. Le premier support intermédiaire 190 est ici, en forme d'anneau et comprend un premier perçage 190.1 dans lequel est sertie la septième extrémité 161.2 du câble 161. Le premier support intermédiaire 190 comprend également un deuxième perçage 190.2 diamétralement opposé au premier perçage 190.1 et dans lequel est sertie la huitième extrémité 162.2 du câble 162.

Le premier support intermédiaire 190 comprend également un troisième perçage 190.3 dans lequel est sertie une neuvième extrémité 191.1 du septième câble 191 et un sixième perçage 190.4 dans lequel est sertie la dixième extrémité 192.1 du câble 192. La onzième extrémité 191.2 du câble 191 est sertie dans un septième perçage 105.1 d'un anneau 105 solidaire de l'écrou 104, et la douzième extrémité 192.2 du câble 92 est sertie dans un huitième perçage 105.2 de l'anneau 105.

De manière homologue, la treizième extrémité 171.2 du troisième câble 71 et la quatorzième extrémité 172.2 du quatrième câble 172 sont attelées à l'écrou 104 par un deuxième support intermédiaire 195 relié à l'écrou 104 par un neuvième câble 196 et un dixième câble 197. Le deuxième support intermédiaire 195 est ici, en forme d'anneau et comprend un septième perçage 195.1 dans lequel est sertie la treizième extrémité 171.2 du câble 171. Le deuxième support intermédiaire 195 comprend également un huitième perçage 195.2 diamétralement opposé au septième perçage 195.1 et dans lequel est sertie la quatorzième extrémité 172.2 du câble 172.

Le deuxième support intermédiaire 195 comprend également un neuvième perçage 195.3 dans lequel est sertie la quinzième extrémité 196.1 du neuvième câble 96 et un dixième perçage 195.4 dans lequel est sertie la seizième extrémité 197.1 du dixième câble 197.

La dix-septième extrémité 196.2 du câble 196 est sertie dans le septième perçage 5.1 et la dix-huitième extrémité 197.2 du dixième câble 197 est sertie dans le huitième perçage 105.2.

Une extrémité arrière 102.1 de la vis 102 comprend un pignon 110 relié par une courroie 111 à une sortie rotative d'un premier moteur 103.

Comme visible aux figures 4 à 6, la première chaîne cinématique 100 comprend une première bielle 101 dont une première extrémité arrière 101.1 est articulée sur le bras 144 du chariot 141 à l'aide d'une rotule 106. La première extrémité avant 101.2 de la première bielle 101 est reliée au bâti 33, qui fait office de manivelle et sur lequel est montée la poignée 30 à l'aide d'une rotule 107.

Ainsi, la première chaîne cinématique 100 comprend, successivement, une sortie linéaire 144 d'un actionneur 199, une bielle 101, une manivelle 33 montée à rotation relativement au châssis 11 et actionnée par la bielle 101.

Ainsi, une rotation de la sortie du moteur 103 entraine en rotation la vis 102 et provoque un déplacement linéaire du premier écrou 104. Ce déplacement linéaire est transmis au chariot 141 et déplace alors la première extrémité arrière 101.1 de la bielle 101 relativement à la platine 20 - et incidemment au châssis 11- qui entraine alors la poignée 30 en rotation autour de l'axe de flexion Of via une liaison bielle 101-manivelle 30. Ainsi, le moteur 103 actionne la deuxième rotation R2 via une sortie linéaire 144 d'un actionneur 199.

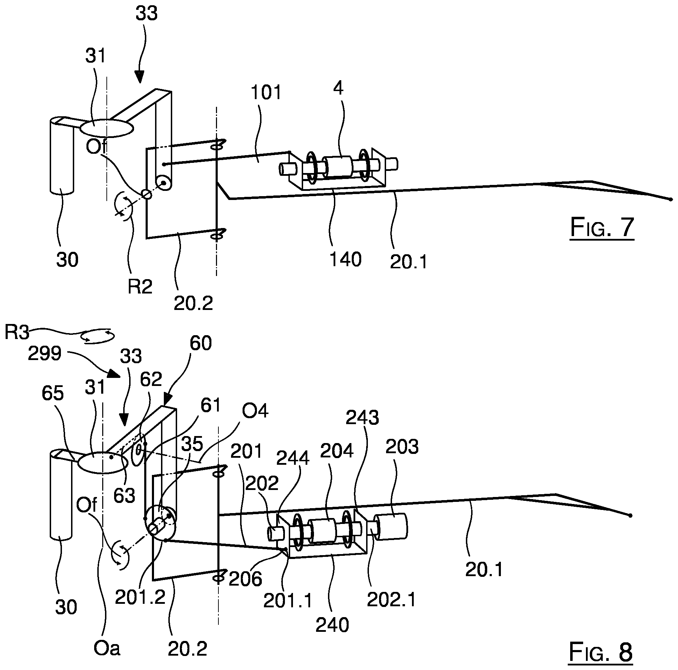

La chaîne cinématique 100 et ses éléments principaux sont cinématiquement représentés en figure 7.

La deuxième chaîne cinématique 200, représentée en figure 8 selon la même représentation que celle de la figure 7, comprend un deuxième ensemble vis 202 / écrou 204 comprenant un deuxième écrou 204 coopérant avec une deuxième vis 202 s'étendant selon une deuxième direction D2 sensiblement parallèle à l'axe longitudinal Ox. La deuxième chaîne cinématique 200 comprend un deuxième dispositif d'anti-rotation 240 pour bloquer une rotation du deuxième écrou 204 relativement à la deuxième vis 202, identique au premier dispositif anti-rotation 140, et former un deuxième actionneur 299 à sortie linéaire. Le deuxième dispositif d'anti-rotation 240 comprend un chariot 241 pourvu de deux bras 243 et 244 et qui est monté mobile en translation selon une direction parallèle à l'axe Ox à l'aide d'un deuxième mécanisme de guidage non représenté. Une extrémité arrière 202.1 de la vis 202 est reliée à une sortie rotative d'un deuxième moteur 203. Le deuxième bras 244 constitue ainsi la sortie linéaire de l'actionneur 299.

Comme visible en figure 8, la deuxième chaîne cinématique 200 comprend une deuxième bielle 201 dont une deuxième extrémité arrière 201.1 est articulée sur le bras 244 du chariot 241 à l'aide d'une rotule 206. La première extrémité avant 201.2 de la deuxième bielle 201 est reliée à une deuxième poulie 35 articulée autour de l'axe Of et visible en figure 2 à 6 et 8. La poulie 35 est reliée à une tringlerie 60 de renvoi. La tringlerie 60 comprend une troisième bielle 61 de renvoi autour de l'axe Of qui s'étend entre la poulie 35 et une troisième poulie 62 de renvoi montée à pivotement sur le bâti 33 autour d'un quatrième axe de rotation O4 sensiblement orthogonale à un plan parallèles aux axes Oa et Of. Une quatrième bielle 63 relie la poulie 62 et la poulie 31 pour actionner la troisième rotation R3 de la poignée 30 autour de l'axe Oa. La poignée 30 est reliée à la poulie 31 par une bielle 65 solidaire en rotation de la poulie 31. L'ensemble constitué par la poulie 31 et la bielle 65 réalise une manivelle actionnée par la bielle 63.

Ainsi, une rotation de la sortie du moteur 203 entraine en rotation la vis 202 et provoque un déplacement linéaire de l'écrou 204. Ce déplacement linéaire est transmis au chariot 241 et déplace alors la deuxième extrémité arrière 201.1 de la bielle 201 relativement à la platine 19- et incidemment relativement au châssis 11- ce qui entraine alors la poignée 30 en rotation autour de l'axe d'abduction Oa. Ainsi, le moteur 203 actionne la troisième rotation R3.

Ainsi, la deuxième chaîne cinématique 200 comprend, une sortie linéaire 244 d'un actionneur 299, une bielle 63, une manivelle 65 montée à rotation relativement au châssis 11 et actionnée par la bielle 62.

On obtient ainsi un membre supérieur dont les actionneurs d'avant-bras sont plus compacts et moins complexes que ceux de l'art antérieur. Le nombre de pièces est également réduit ce qui procure un avantage important en termes de fiabilité et de coûts de réalisation. Enfin, aucun actionneur ne subit l'inertie de l'autre actionneur (poids du moteur et des éléments de transformation de mouvement) ce qui améliore également l'encombrement, le poids, la consommation énergétique et le coût de fabrication du membre supérieur 1.

Bien entendu, l'invention n'est pas limitée aux modes de réalisation décrits mais englobe toute variante entrant dans le champ de l'invention telle que définie par les revendications. En particulier,
- bien qu'ici la première chaîne cinématique et la deuxième chaîne cinématique comprenne toutes deux une bielle dont une extrémité arrière est attelée à une sortie de l'actionneur et dont une extrémité avant est attelée à l'interface de liaison, l'invention s'applique également à une seule des deux chaînes cinématique équipée d'une telle bielle, l'autre chaîne pouvant être actionnée selon des modalités d'actionnement connues de l'homme du métier tels que des motoréducteurs ou des vérins à câble avec des poulies de renvoi ;
- bien qu'ici les barres soient reliées aux supports avant et arrière par des liaisons rotule, l'invention s'applique également à d'autres types de liaisons sphériques, .e. une liaison offrant trois rotations autour de trois axes orthogonaux, comme par exemple un cardan associée à une liaison pivot concourant au centre du cardan, ou une rotule associée à une liaison pivot, ou tout autre liaison ou combinaison de liaison équivalente ;
- bien qu'ici les deux extrémités des barres soient reliées aux supports par des rotules, l'invention s'applique également à d'autres types de liaisons des barres aux supports comme par exemple des barres ayant des liaisons rotules au niveau des extrémités reliées au même support, et des liaisons cardans à leurs autres extrémités. De manière avantageuse, les liaisons sont homogènes sur chaque support. On pourrait également prévoir de réaliser les liaisons entre les barres et les supports directement par articulations élastiques ;
- bien qu'ici le membre comprenne une poignée, l'invention s'applique également à d'autres types d'interfaces de liaison à une main d'un utilisateur comme par exemple un gant ou une sangle ;
- bien qu'ici la première chaîne cinématique comprenne un ensemble vis/écrou actionné par un moteur et relié à un dispositif d'anti-rotation pour former un actionneur à sortie linéaire, l'invention s'applique également à d'autres types d'actionneurs à sortie linéaire comme par exemple un actionneur linéaire tel qu'un vérin hydraulique, pneumatique ou électrique, ou encore un ensemble pignon /crémaillère ;
- bien qu'ici , la première extrémité arrière de la première bielle soit articulée sur un bras du chariot, l'invention s'applique également à une première extrémité arrière articulée sur d'autres types de sortie de l'actionneur de la deuxième rotation, comme par exemple la base du chariot ou sur l'écrou.

## Revendications

1. Membre supérieur (1) d'exosquelette comprenant ;
- un châssis (11) s'étendant selon un axe longitudinal (Ox) et qui est destiné à accueillir un avant-bras (1010) d'un utilisateur (1000), le châssis (11) comprenant un support avant (12) de poignet et un support arrière (13) reliés par une structure (14) pour autoriser une première rotation (R1) de pronosupination du support avant (12) relativement au support arrière (13) autour de l'axe longitudinal (Ox) ;
- une interface de liaison (30) à une main (1020) de l'utilisateur (1000),
- l'interface de liaison (30) étant montée mobile relativement au châssis (11) pour effectuer une deuxième rotation (R2) autour d'un axe de flexion/extension (Of) et pour pouvoir effectuer une troisième rotation (R3) autour d'un axe d'adduction/abduction (Oa);
- la deuxième rotation (R2) étant actionnée par une première chaîne cinématique (100) d'actionnement comprenant un premier actionneur (199), et
- la troisième rotation (R3) étant actionnée par une deuxième chaîne cinématique (200) d'actionnement comprenant un deuxième actionneur (203), dans lequel
- la première chaîne cinématique (100) comprend une première bielle (101) dont une première extrémité arrière (101.1) est articulée sur une première sortie du premier actionneur (103), la première bielle (101) comprenant une première extrémité avant (101.2) attelée à l'interface de liaison (30), et/ou
- la deuxième chaîne cinématique (200) comprend une deuxième bielle (201) dont une deuxième extrémité arrière (201.1) est articulée sur une deuxième sortie (201.2) du deuxième actionneur (203) et la deuxième bielle (201) comprend une deuxième extrémité avant (201.2) attelée à l'interface de liaison (30).

2. Membre supérieur (1) selon la revendication 1, dans lequel la première extrémité arrière (101.1) et/ou la première extrémité avant (101.2) et/ou la deuxième extrémité arrière (201.1) et/ou la deuxième extrémité avant (201.2) comprennent une liaison rotule.

3. Membre supérieur (1) selon la revendication 1 ou 2, dans lequel la deuxième extrémité avant (201.2) est reliée à une tringlerie (60) de renvoi qui comprend une troisième bielle (61) de renvoi autour d'un troisième axe de rotation (Of) et une quatrième bielle (62) de renvoi autour d'un quatrième axe de rotation (O4).

4. Membre supérieur (1) selon la revendication 3, dans lequel le troisième axe (Of) est confondu avec l'axe de flexion/extension (Of).

5. Membre supérieur (1) selon l'une quelconque des revendications précédentes, dans lequel l'interface de liaison (30) est montée à rotation autour de l'axe d'adduction/abduction (Oa) relativement à un bâti (33), le bâti (33) étant lui-même monté à rotation relativement au châssis (11) autour de l'axe de flexion/extension (Of).

6. Membre supérieur (1) selon l'une quelconque des revendications précédentes, dans lequel le premier actionneur (103) comprend
- un premier ensemble vis (102)/écrou (104) comprenant un premier écrou (104) coopérant avec une première vis (102) s'étendant selon une première direction (D1) sensiblement parallèle à l'axe longitudinal (Ox) ;
- un premier dispositif d'anti-rotation (140) pour bloquer une rotation du premier écrou (104) relativement à la première vis (102),
- un premier moteur (103) agencé pour entraîner en rotation la première vis (102) autour de la première direction (D1) et provoquer un déplacement linéaire du premier écrou (104) ; dans lequel
la première extrémité arrière (101.1) est attelée au premier écrou (104).

7. Membre supérieur (1) selon la revendication 6, dans lequel le premier dispositif d'anti-rotation (140) comprend un premier chariot (141) relié d'une part au premier écrou (104) et d'autre part à la première extrémité arrière (101.1) de la première bielle (101), le premier dispositif d'anti-rotation (140) comprenant également un premier mécanisme de guidage (150) d'une translation du premier chariot (141) relativement au châssis (11) selon une direction (D1) parallèle à l'axe longitudinal (Ox), et dans lequel le premier chariot (141) est relié au premier écrou (104) par un première paire de câbles (160) comprenant un premier câble (161) et un deuxième câble (162) s'étendant de part et d'autre de la première vis (102) ainsi que par une deuxième paire de câbles (170) comprenant un troisième câble (171) et un quatrième câble (172) s'étendant de part et d'autre de la première vis (102), la première paire de câbles (160) et la deuxième paire de câbles (170) s'étendant selon une direction sensiblement parallèle à l'axe longitudinal (Ox), la première paire de câbles (160) et la deuxième paire de câbles (170) étant situées de part et d'autre d'un plan passant par le premier écrou (104) et qui est normal à la première vis (102).

8. Membre supérieur (1) selon la revendication 7, dans lequel le premier câble (161) et le deuxième câble (162) sont attelés au premier écrou (104) par un premier support intermédiaire (190) relié au premier écrou par un septième câble (191) et un huitième câble (192).

9. Membre supérieur (1) selon la revendication 7 ou 8, dans lequel le troisième câble (171) et le quatrième câble (172) sont attelés au premier écrou (104) par un deuxième support intermédiaire (195) relié au premier écrou (104) par un neuvième câble (196) et un dixième câble (197).

10. Membre supérieur (1) selon l'une quelconque des revendications précédentes, dans lequel le deuxième actionneur (203) comprend
- un deuxième ensemble vis (202)/écrou (204) comprenant un deuxième écrou (204) coopérant avec une deuxième vis (202) s'étendant selon une deuxième direction sensiblement parallèle à l'axe longitudinal (Ox) ;
- un deuxième dispositif d'anti-rotation (240) pour bloquer une rotation du deuxième écrou (204) relativement à la deuxième vis (202),
- un deuxième moteur (203) agencé pour entraîner en rotation la deuxième vis (202) autour de l'axe longitudinal (Ox) et provoquer un déplacement linéaire du deuxième écrou (204) ; dans lequel
la deuxième extrémité arrière (201.1) est attelée au deuxième écrou (204).
